# EUROPEAN PATENT APPLICATION

(11) **EP 4 220 915 A1**
(43) Date of publication of application: **02.08.2023**
(21) Application number: 22315025.1
(22) Date of filing: 27.01.2022
(51) Int. Cl.: H02K 9/06, B61C 9/50, B61F 3/04

(54) **AIR-OUTLET-HOOD FOR SELF-VENTILATED TRACTION MOTORS FOR ROLLING STOCK**

(71) Applicant: ALSTOM Holdings, 93400 Saint-Ouen-sur-Seine (FR)
(72) Inventor: Diedrichs, Ben, SE 17240 Sundbyber (SE)
(74) Representative: Alatis

(57) **Abstract**

The invention relates to an airflow hood for a self-ventilated traction motor (6, 7) mechanically attached to a casing of said traction motor (6, 7) and substantially surrounding a rotatable motor shaft of said traction motor (6, 7), said airflow hood (9) comprising a main body mounted on said casing, and an air duct presenting at one end an airflow inlet and at the other end an airflow outlet (15) downwardly oriented. The airflow hood (9) is located at a proximal end of the traction motor (6, 7) opposed to a shaft prolonging said rotatable motor shaft for driving an axle (3,4); and the air-flow outlet (15) is arranged asymmetrically with respect to a longitudinal axis of said traction motor (6, 7) on one side of said traction motor (6, 7).

## Description

### TECHNICAL FIELD OF THE INVENTION

The present invention relates in general to the technical field of electric rolling stock driven by one or more electrical traction motors.

The invention relates more specifically the cooling of traction motors for rolling stock to mitigate high temperature in a drive axles area.

### PRIOR ART

In the following, it should be understood by longitudinal and lateral direction axis parallel and perpendicular to the usual moving direction of the concerned rolling stock. The same applies to the front and back, or the top and bottom which correspond to the regular position of the railway rolling stock.

Usually, rail vehicles comprise a vehicle body mechanically connected to at least two bogies. A bogie is a frame on which at least a couple of wheel axles (referred to as axels in the following) are attached and comprising a breaking device and a suspension assembly linking the axles to the frame. For traction or self-propelling rail vehicles, at least one axle of the bogie is driven by an electrical traction motor.

In operation, the traction motor is air-cooled. Self-ventilated traction motors are well known wherein a fan is attached to the free extremity of a rotatable motor shaft of the traction motor, the other extremity of the rotatable motor shaft being connecting to the drive axle, e.g., by a gearbox. When the rotatable motor shaft of the traction motor drives the axle, it also rotates the fan generating thereby an axial airflow moving along the casing and the rotatable motor shaft which thereby drains to the outside the heat generated inside of the traction motor. Generally, such traction motors comprise an airflow hood at the end of the traction motor opposed to the fan for guiding downwardly the airflow exhaust.

The area of the bogie where the airflow hood is located contains several critical mechanical compounds as indicated above restricting drastically the space available for implanting the airflow hood. Moreover, high temperature areas maybe generating by the heat drained outside for cooling the traction motor.

In the prior art, the airflow hood presents an airflow outlet oriented downwardly and arranged symmetrically on both sides of the longitudinal axis of the traction motor. The downward orientation of the airflow outlet guides the hot air expelled from the airflow hood toward the track bed. This airflow hood design results mainly from the space constraints in this area of the bogie and aims at avoiding heating an underframe of the rail vehicle. However, it does not prevent this hot airflow to heat the mechanical compounds neighbouring the traction motor by this hot air flow.

Therefore, there is a need for an efficient cooling of the traction motor which does not contribute to the heating of the mechanical compound surrounding the traction motor, for example the braking device or the gearbox, despite the high density of mechanical compounds in this area of the bogie.

Moreover, self-ventilated traction motors are sensitive to high local ambient temperatures. When, for example, two traction motors are arranged in one bogie, an upstream traction motor being arranged before a downstream traction motor with respect to the airflow generated below the rail vehicle when it is in motion, may generate so-called recirculation effects. This means that hot air from the upstream traction motor is ingested into the downstream traction motor. This recirculation effect is reinforced by the common arrangement of the airflow hood of the traction motors where an air intake of the downstream traction motor is somewhat aligned with air outlets of the upstream traction motor. This may overheat the traction motor and reduce its longevity.

Usually the air intake and outlets are on opposite ends of the traction motors, where the cooling airflow is propelled by the internal fan that is mounted on the rotatable motor shaft. Time averaged losses over a duty cycle (journey) of the traction motor may be in the order of magnitude of 10 kW, which significantly heats up the cooling air. There is a need to maximise the cooling performance and to reduce noise generated by the cooling airflow without causing substantial over temperatures in the area of critical mechanical compounds of the bogie located downstream to the traction motor as indicated above.

### DISCLOSURE OF THE INVENTION

The purpose of the current invention is to remedy to all or at least part of the technical problems mentioned above such as preventing and reducing hot air from the upstream traction motor to reach and to be ingested into any downstream traction motors mounted on, for example the same bogie or a downstream bogie. In addition, it may prevent the impact of hot air on other compounds attached to the underframe or the bogies of the rolling stock vehicle.

To this aim, it is proposed according to a first aspect of the invention, an airflow hood for a self-ventilated traction motor mechanically attached to a casing of said traction motor, said airflow hood comprising: a main body mounted on said casing and substantially surrounding a longitudinal axis of said traction motor; and an air duct presenting at one end an airflow inlet and at the other end an airflow outlet downwardly oriented, wherein said airflow hood is located at a proximal axial end of the casing opposed to a distal axial end of said casing from which a rotatable motor shaft axially protrudes to drive an axle.

In a preferred embodiment of the invention, said air-flow outlet is arranged asymmetrically with respect to a vertical axial plane containing said longitudinal axis of said traction motor

According to an embodiment of the invention, the airflow enters the main body in a substantially axial direction and comes out by the airflow outlet in a substantially tangential direction with respect to cylinders coaxial with said traction motor, and/or the airflow outlet is arranged substantially horizontally facing downwardly.

According to another embodiment of the invention, the airflow outlet is located on the side of said traction motor opposed to the axle driven by said traction motor.

According to a further embodiment of the invention, a section of said air duct progressively increases toward the airflow outlet; and/or the airflow outlet extends substantially on all the lower side of the main body of said airflow hood.

According to another embodiment of the invention, the air duct extends substantially along a side of said main body opposed to said axle.

Alternatively, said airflow outlet is located on a side of the axle opposed to the traction motor; and/or said airflow outlet is arranged substantially horizontally.

According to an embodiment of the invention, the air duct extends beyond said main body so that it passes to the other side of the axle; and/or the section of said air duct is progressively decreasing toward the airflow outlet.

According to another embodiment of the invention, the airflow hood is substantially U-shaped, wherein the main body forms a first leg of the U-shaped airflow hood, and the air duct forms a second leg of the U-shaped airflow hood; and the axle driven by said traction motor is arranged between said first and second legs of the U-shaped airflow hood.

It is proposed according to a second aspect of the invention, a self-ventilated traction motor comprising a casing surrounding a rotatable motor shaft prolonged by a shaft for transmitting driving power, and a fan attached to the rotatable motor shaft on the side of the shaft for generating a cooling airflow circulating longitudinally through the self-ventilated traction motor. The self-ventilated traction motor further comprises an airflow hood as described above for guiding the cooling airflow exhaust.

It is proposed according to a third aspect of the invention, a railway bogie comprising a frame, at least one axle rotatably attached to said frame, and at least one gearbox mechanically connected to said at least one axle. The railway bogie further comprises at least one self-ventilated traction motor as defined above for driving said at least one gearbox.

According to another embodiment of the invention, the railway bogie comprises two gearboxes, two axles, an upstream self-ventilated traction motor; and a downstream self-ventilated traction motor each one being connected to the corresponding gearbox for driving the respective axle.

Other features and advantages of the present invention will emerge from the following description of embodiments of the invention provided as non-limitative examples for achieving various aspects of the invention.

### BRIEF DESCRIPTION OF THE FIGURES

The description refers to the attached figures which illustrate, also by way of example, different embodiments of the invention:
Figure 1 shows a perspective view from below and right of a railway bogie;
Figure 2 shows a longitudinal cross-sectional view of a traction motor;
Figure 3 shows a perspective view from below of a self-ventilated traction motor according to a first embodiment of the invention ;
Figure 4 shows a side view of the airflow hood in an upside down orientation;
Figure 5 shows a perspective view from below of a self-ventilated traction motor with an airflow hood according to a second embodiment of the invention ; and
Figure 6 shows a side view of the airflow hood of figure 5 in an upside down orientation.

Identical or similar features are spotted by the same reference signs in all figures for convenience of the reader.

### DETAILED DESCRIPTION OF THE INVENTION

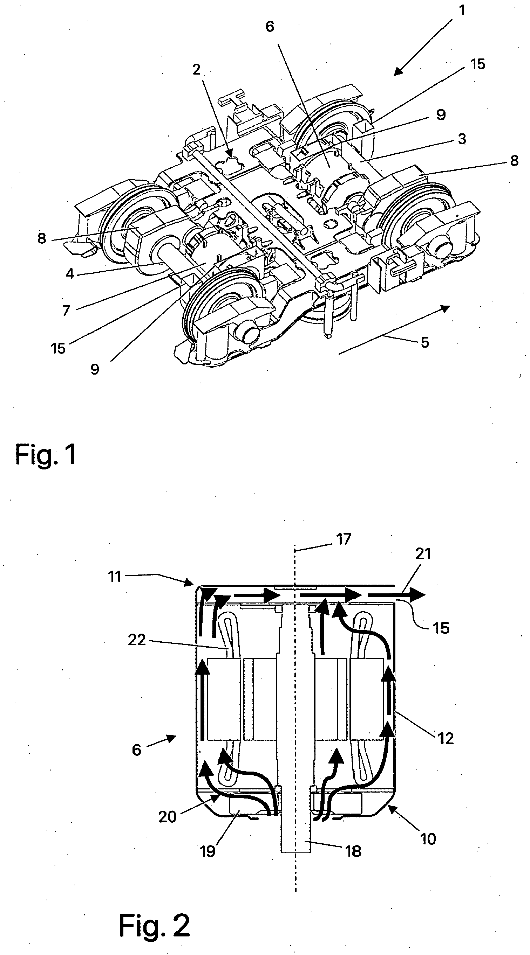

Figure 1 shows a bogie 1 for rolling stock presenting a frame 2 on which two axles are rotatably attached, an upstream axle 3 at the front of the bogie 1 and a downstream axle 4 at the back of the bogie 1. Upstream and downstream are to be understood with respect to an airstream, relative to the vehicle, travelling below the rolling stock when it is in motion in direction 5. An upstream traction motor 6 and a downstream traction motor 7 drive in rotation respectively the upstream axle 3 and the downstream axle 4 via a gear box 8. The upstream and downstream traction motors 6 and 7 are self-ventilated electrical motors.

As shown in figure 2, these traction motors 6 and 7 are of the so-called semi-open type which is more effective than the closed type for cooling the extremities of the traction motors. For convenience reasons, it will be referred in the following only to the traction motor 6 instead of the upstream and downstream traction motors 6 and 7.

The power delivered by the traction motor 6 depends of the performance of the traction motors cooling which is achieved by a cooling airflow 20 generated by a fan 19. The fan 19 is driven by a rotatable motor shaft 18 of the traction motor 6. The fan 19 is mechanically attached on the end of the rotatable motor shaft 18 which is connected to the gearbox 8. When the traction motor 6 rotates, the fan 19 ingests fresh air which is pushed axially through the inside of the traction motor 6 for cooling, in particular, coil windings 22 attached to a casing 12 around the rotable motor shaft 18 and magnets 23 attached to the rotatable motor shaft 18 in opposition to the coil windings 22. After having drained the heat of the traction motors 6, the cooling air flow 20 leaves the traction motor 6 by its end opposed to the gearbox 8 where it is collected by an airflow hood 9.

The self-ventilated traction motor 6 is part of an assembly used for rail vehicles, comprising the casing 12, a motor shaft 18 rotatable about an horizontal longitudinal axis 17 of the self-ventilated traction motor 6. A fan 19 is powered by the rotatable motor shaft 18 for blowing cooling air into the casing 12. The fan 19 is located at a distal axial end 10 of the casing 12, and the airflow hood 9 surrounds the longitudinal axis 17 at a proximal end 11 of the casing 12 for collecting said cooling air flow 20 out of the casing 12. The airflow hood 9 comprises an air duct 16 presenting a downward-facing outlet 15 for directing the collected cooling air flow 20 downwards to the outside. The rotatable motor shaft 18 protrudes from the distal end 10 of the casing 12 for driving one or more axle 3 or 4 of the rail vehicle and the airflow outlet 15 is asymmetrical relative to a vertical axial plane containing the longitudinal axis 17.

Positioning the fan 20 at distal end 10 of the traction motor 6 and the airflow hood 9 at the proximal end 11 limits significantly the hot air leakage issues along the rotatable motor shaft 18 as the rotatable motor shaft 18 does not need to go through the airflow hood 9. Therefore, this arrangement according to the invention contributes to avoid that hot air flow circulates between the compounds located in the traction motor area. This is reinforced by the air duct 16 and the airflow outlet 15 which effectively direct the hot airflow exhaust away from the traction motor 6 in a downwards direction where it mitigates with the cold air stream below the bogie 1

The airflow hood 9 attached to the traction motor 6 directs the hot air escaping the traction motor 6 towards the ground below the bogie frame 2, where the air stream moving below the rolling stock is the strongest. Thereby, hot air released downwardly by the airflow hood 9 blends more effectively with the airstream causing a significant reduction of the air temperature. This improves the cooling performance of the traction motor 6. In particular, the air released by the airflow hood 9 of the upstream traction motor 6 and ingested by the fan of the downstream traction motor 7 is cooler and the so-called air recirculation affects less the cooling of the downstream motor 7.

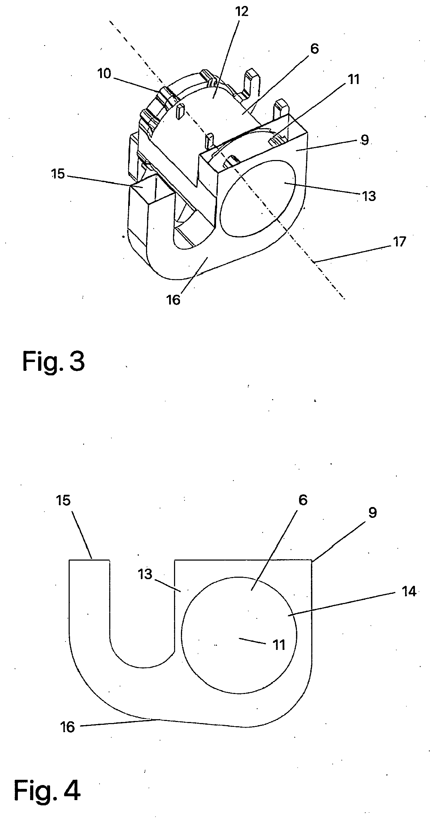

Details of the airflow hood 9 mounted on the traction motor 6 are shown in figures 2 and 3. At a distal extremity 10 of the traction motor 6 on the side of the gearbox 8, the rotatable motor shaft is connected to the corresponding gearbox 8 (not shown), and at a proximal extremity 11 at the opposed side of the gearbox 8, the airflow hood 9 is mechanically attached, preferably in a removable way, to a casing 12 of the traction motor 6. The pressurised cooling airflow 20 circulates longitudinally inside the casing 12 around the whole casing 12 for yelding an efficient and uniform cooling of the traction motor 6. Then, the heated cooling airflow 20 comes out of the casing 12 axially from the proximal extremity 11 of the traction motor 6 leaves the casing 12 and is collected in a main body 13 through a section of the airflow hood 9 surrounding the rotatable motor shaft and adjacent to the casing 12. Then the hot airflow is transfered to an air duct 16 through an airflow inlet 14 located at a connexion section between the main body 13 and the air duct 16. The main body 13 encapsulates the proximal extremity 11 of the traction motor 6 so that the pressurised hot air is forced to pass through the airflow hood 9. Then, the hot air collected in the main body 13 escapes the airflow hood 9 by an airflow outlet 15. The airflow outlet 15 is located at a first end of the air duct 16 opposed to airflow inlet 14. The airflow outlet 15 is arranged substantially horizontally and faces downwardly so that the pressurised hot air after having been transferred from the main body 13 of the airflow hood 9 into the air duct 16 is blown out of the airflow hood 9 downwardly toward the track bed by the airflow outlet 15 of the air duct 16.

The airflow outlet 15 is arranged asymmetrically with respect to a vertical axial plane containing a longitudinal axis 17 of the traction motor 6. With this arrangement the airflow hood 9 can use optimally the limited space available in this area of the bogie 1 so that the design of the airflow hood 9, in particular of the air duct 16 can effectively guide the heated cooling airflow 20 to the track bed away from the heat sensitive compounds surrounding the traction motor 6. Moreover, the heated cooling airflow 20 being effectively guided towards the higher-speed airstream moving below the bogie where it effectively mixes with the cold air, it less likely contributes to the overheating of any downstream traction motor in case of air recirculation. With this asymmetrical arrangement, only one flow of hot air is blown out of the airflow hood 9 which avoids the aerodynamic turbulence generated by other airflow escaping the airflow hood.

The outgoing hot airflow leaves the traction motor 6 in a substantially axial direction and is oriented in a substantially radial direction in the main body 13 before taking in the air duct 16 a tangential direction with respect to cylinders coaxial with the traction motor 6. This tangential escaping direction when the hot airflow leaves the airflow hood 9 by the airflow outlet 15 contributes to the effective mitigation of the hot airflow with the cold air stream. The length of the air duct 16 helps to redirect effectively the hot airflow and to limit the turbulence of the hot airflow. The longer the air duct 16, the closer to the ground is the air exhuast. The air flow relative to the vehicle increases gradually towards the ground, thus the mixing of hot air into the colder air stream becomes more effective from a cooling point of view. Therefore, the air duct 16 extends away from the main body 9 above the upstream axle 3 (or the downstream axle 4 according to whether the upstream traction motor 6 or the downstream traction motor 7 is considered). Then, the air duct 16 extends further downwardly on the side of the upstream axle 4 opposed to the upstream traction motor 6. With this arrangement, the air duct 16 can have a sufficient length for effectively directing the hot airflow and limiting the turbulence at the airflow outlet 15.

To this end, the airflow hood 9 is substantially U-shaped. The main body 13 attached to the casing 12 forms a first leg of the U-shaped airflow hood 9. The air duct 16 forms a second leg of the U-shaped airflow hood 9 located on the side of the axle 3. With this arrangement the axle 3 is located between the first and the second legs of the U-shaped airflow hood 9 which enable the air duct 16 to use effectively the available space for maximising its length.

In order to accelerate the hot airflow the air duct 16, the section of the air duct 16 decreases from the main body 13 to the airflow outlet 15. The speed of the hot airflow coming out of the airflow outlet 15 also contributes to its effective injection in the cold air stream between the bogie 1 and the rails.

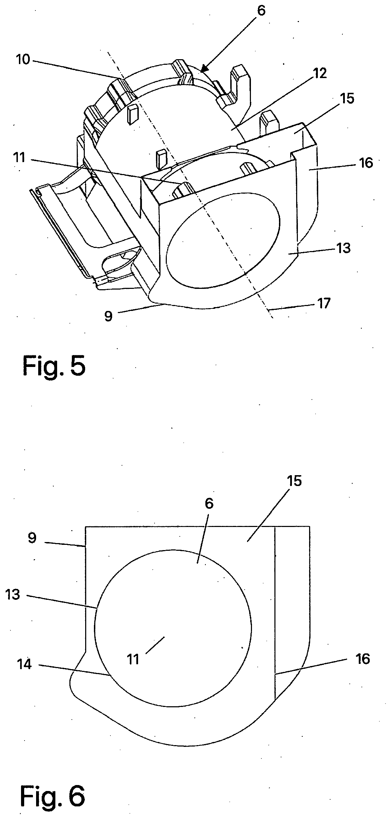

Figures 4 and 5 show an airflow hood 9 attached to a traction motor 6 according to a second embodiment of the invention. In this embodiment of the airflow hood 9, the airflow outlet 15 is located on the side of the longitudinal axis 17 of the traction motor 6 opposed to the axle 3 driven by the traction motor 6. This arrangement of the airflow outlet avoids that the hot air coming out of the airflow hood 9 heats the axle 3 and the bearings of the axle 3 (not shown) on the side of the traction motor 6.

The airflow outlet 15 is disposed horizontally on the same plan as the lower side of the main body 13 of the airflow hood 9 and is facing downwardly as described above. The air duct 16 extends laterally along the main body 13 from an upper side, of the main body 13 to the airflow outlet 15 on the lower side of the main body 13. With this design of the air duct 16 the airflow hood 9 can be achieved with a more compact design while still sufficiently guiding the hot airflow downwardly to the rails.

As shown in figure 4, there is no separation wall between the air duct 16 and the main body 13 mainly for a cheaper production of the airflow hood 9. Alternatively a separation wall could be located between the main body 13 and the air duct 16. The section of the air duct increases from the connection with the main body 13 and the airflow outlet 15. According to a further design option of the airflow hood 9 the airflow outlet 15 extends beyond the air duct 16 on substantially the whole lower side of the main body 13. These features contribute to reducing the airflow impedance throughout the air duct for seamless escape of the hot airflow downwardly toward the ground.

The above description and the figures relate to different embodiments of specific aspects of the invention, in particular the design of the air duct and of the airflow outlet implemented in a bogie for rail vehicles. They could be configured and implemented in other ways and in different contexts such as, for example, street cars, underground vehicles. For example, in the description the bogie comprises 2 axles driven by traction motors. Alternatively, the bogie can comprise only one driven axle with another non-driven axle.

## Claims

1. An airflow hood for a self-ventilated traction motor (6, 7) mechanically attached to a casing (12) of said traction motor (6, 7), said airflow hood (9) comprising:
- a main body (13) mounted on said casing (12) and substantially surrounding a longitudinal axis (17) of said traction motor (6, 7); and
- an air duct (16) presenting at one end an airflow inlet (14) and at the other end an airflow outlet (15) downwardly oriented;
**characterised in that** said airflow hood (9) is located at a proximal axial end (11) of the casing (6, 7) opposed to a distal axial end (10) of the casing (6, 7) from which a rotatable motor shaft (18) axially protrudes to drive an axle (3, 4).

2. The airflow hood for a self-ventilated traction motor of claim 1, wherein said airflow outlet (15) is arranged asymmetrically with respect to a vertical axial plane containing said longitudinal axis (17) of said traction motor (6, 7).

3. The airflow hood for a self-ventilated traction motor of any one of claim 1 or 2, wherein:
- a cooling airflow coming out of said casing (12) enters the main body (13) and comes out of the airflow hood (9) by the airflow outlet (15) in a substantially tangential direction with respect to cylinders coaxial with said traction motor (6, 7), and/or
- the airflow outlet (15) is arranged substantially horizontally facing downwardly.

4. The airflow hood for a self-ventilated traction motor of any one of claims 1 to 3, wherein said airflow outlet (15) is located on a side of said traction motor (6, 7) opposed to the axle (3, 4) driven by said traction motor (6, 7).

5. The airflow hood for a self-ventilated traction motor of claim 4, wherein:
- a section of said air duct (16) progressively increases toward the airflow outlet (15); and/or
- the airflow outlet (15) extends substantially on all the lower side of the main body (13) of said airflow hood (9).

6. The airflow hood for a self-ventilated traction motor of any one of claim 4 or 5, wherein the air duct (16) extends substantially along a side of said main body (13) opposed to said axle (3, 4).

7. The airflow hood for a self-ventilated traction motor of any one of claims 1 to 3, wherein:
- said airflow outlet (15) is located on a side of the axle (3, 4) opposed to the traction motor (6, 7); and/or
- said airflow outlet (15) is arranged substantially horizontally.

8. The airflow hood for a self-ventilated traction motor of claim 7, wherein:
- the air duct (16) extends beyond said main body (13) so that it passes to the other side of the axle (3, 4); and/or
- the section of said air duct (16) is progressively decreasing toward the airflow outlet (15).

9. The airflow hood for a self-ventilated traction motor of claim 8, wherein:
- the airflow hood (9) is substantially U-shaped, wherein the main body (13) forms a first leg of the U-shaped airflow hood (9), and the air duct (16) forms a second leg of the U-shaped airflow hood (9); and
- the axle (3, 4) driven by said traction motor (6, 7) is arranged between said first and second legs of the U-shaped airflow hood (9).

10. A self-ventilated traction motor assembly comprising a casing (12) surrounding a rotatable motor shaft (18) transmitting driving power to a gearbox (8), and a fan (19) attached to the rotatable motor shaft (18) on the side of the gearbox (8) for generating a cooling airflow (20) circulating longitudinally through the self-ventilated traction motor (6, 7), **characterised in that** the self-ventilated traction motor assembly further comprises an airflow hood (9) according to any one of claim 1 to 9 for guiding a cooling airflow exhaust (21).

11. A railway bogie comprising a frame (2), at least one axle (3, 4) rotatably attached to said frame (2), and at least one gearbox (8) mechanically connected to said at least one axle (3, 4), **characterised in that** the railway bogie further comprises at least one self-ventilated traction motor (6, 7) according to claim 10 for driving said at least one gearbox (8), said traction motor being arranged parallelly to and space apart from said corresponding axle (3, 4), wherein the casing (12) is mechanically attached to said frame (2).

12. The railway bogie of claim 11 further comprising two gearboxes (8), two axles (3, 4), an upstream self-ventilated traction motor (6); and a downstream self-ventilated traction motor (7) each one being connected to the corresponding gearbox (8) for driving the respective axle (3, 4).
